(19) Europäisches Patentamt
European Patent Office
Office européen des brevets

(11) **EP 1 921 095 B1**

(12) **EUROPEAN PATENT SPECIFICATION**

(45) Date of publication and mention
of the grant of the patent:
**14.06.2017 Bulletin 2017/24**

(21) Application number: **06782433.4**

(22) Date of filing: **07.08.2006**

(51) Int Cl.:
***C08F 8/28*** *(2006.01)*        ***C08F 8/48*** *(2006.01)*
***C08F 16/06*** *(2006.01)*       ***C08F 216/38*** *(2006.01)*

(86) International application number:
**PCT/JP2006/315591**

(87) International publication number:
**WO 2007/018174 (15.02.2007 Gazette 2007/07)**

(54) **METHOD FOR PRODUCING A POLYVINYL ACETAL RESIN**

VERFAHREN ZUR HERSTELLUNG EINES POLYVINYLACETALHARZES

PROCÉDÉ POUR PRODUIRE UNE RÉSINE DE POLYACÉTAL DE VINYLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.08.2005 JP 2005230550**

(43) Date of publication of application:
**14.05.2008 Bulletin 2008/20**

(73) Proprietor: **Kuraray Co., Ltd.**
**Okayama 710-8622 (JP)**

(72) Inventors:
• **TSUJI, Yoshihisa**
**Kurashiki-shi, Okayama 710-8691 (JP)**
• **YAMANAKA, Masayoshi**
**Kurashiki-shi, Okayama 710-8691 (JP)**
• **KUSUDOU, Takeshi**
**Kurashiki-shi, Okayama 710-8622 (JP)**
• **IWASAKI, Hideharu**
**Kurashiki-shi, Okayama 710-8691 (JP)**
• **SUGIOKA, Takashi**
**Kurashiki-shi, Okayama710-8691 (JP)**

(74) Representative: **Müller-Boré & Partner**
**Patentanwälte PartG mbB**
**Friedenheimer Brücke 21**
**80639 München (DE)**

(56) References cited:
**EP-A- 1 775 311        WO-A1-03/033548**
**JP-A- 2005 002 285     JP-A- 2006 022 160**

**Description**

The present invention relates to a method for producing a polyvinyl acetal resin, particularly to the method characterized by reacting a polyvinyl alcohol and an aldehyde in the presence of an acid catalyst including carbon dioxide.

A polyvinyl acetal resin is a polymer which is tough and excellent in chemical resistance and it exerts strong adhesiveness to the surface of various materials. Because of such properties, a polyvinyl acetal resin is effective as a material for coating. It is used also as an intermediate film for safety glass. A polyvinyl acetal resin is used in various applications such as coating compounds, adhesives, binders and molded products.

Methods for producing a polyvinyl acetal using a reaction between a polyvinyl alcohol and an aldehyde are publicly known (See, for example, Non-Patent Document 1). The typical method for producing a polyvinyl acetal resin, which is in industrial use today, is the following; namely, a method which includes reacting a polyvinyl alcohol and an aldehyde in an aqueous solution in the presence of an acid catalyst to yield a slurry containing a polyvinyl acetal resin formed, neutralizing the slurry with an alkali, followed by dehydrating, washing and then drying it to yield a polyvinyl acetal resin particle.

In this method, the acid used as a catalyst is a strong acid such as hydrochloric acid and sulfuric acid. After the completion of the acetalization reaction, a neutralization treatment should be performed. In the neutralization treatment, an alkali compound such as sodium hydroxide is used and reacts with the acid catalyst to form a metal salt. The metal salt thus formed, unreacted acid catalyst and unreacted alkali compound are incorporated in particles of the polyvinyl acetal resin and adhere to the surface of the resin particles. Such substances can be removed to some extent by repetitive washing with water, but it is difficult to remove the substances incorporated inside the resin particles.

Thus, problems such as those shown below are caused by the impurities remaining in a polyvinyl acetal resin. For example, alkali metals affect the electrical insulation property, transparency and thermal stability of a polyvinyl acetal resin. The residue of an acid component triggers a dehydration reaction and, therefore, affects thermal stability. In use for electronic component applications, contamination of metal elements or halogen elements should be strongly avoided.

In order to solve the aforementioned problems caused by the residue of acid catalysts or alkali compounds, various production methods have been proposed. For example, Patent Document 1 discloses a method in which an acetalization reaction is performed under stirring with a predetermined stirring power and then the acetalization reaction proceeds under high-speed stirring, thereby depositing polyvinyl acetal resin particles. It is reported that, by use of this method, resin particles with good washability can be obtained in a purification process. Patent Document 2 discloses a method in which a slurry of an acetalization reaction product containing an acid catalyst is neutralized with an alkali while being vibrated with an ultrasonic wave. It is reported that, by use of this method, an acid catalyst remaining within resin particles tends to diffuse and therefore a neutralization reaction proceeds rapidly. Patent Document 3 discloses a method in which after an acetalization reaction using an acid catalyst, particles having an average particle diameter of 5 $\mu$m or less are deposited and precipitated, followed by neutralization of the resulting slurry with an alkali, washing with water and subsequent purification by electrodialysis. It is reported that, by use of this method, a polyvinyl acetal resin containing extremely less metal components can be obtained. In these methods, however, washing operations are complicated and it is difficult to practice them on industrial scales.

Patent Document 4 discloses a method for producing a polyvinyl acetal resin which comprises promoting an acetalization reaction without use of an acid catalyst by pressurizing a solution or suspension containing a polyvinyl alcohol resin and a carbonyl compound. It is reported that, by use of this method, it is possible to omit complicated processes, such as neutralization of an acid catalyst and washing a resulting resin. Patent Document 4 has no disclosure about the acid values of raw materials. According to experiments by the inventors of the present invention, in use of an aldehyde controlled to have a low acid value, a catalyst-free reaction under pressure with nitrogen proceeds extremely slowly and therefore it is difficult to obtain an industrially practical reaction rate. It is considered that the presence of a carboxylic acid as an impurity in an aldehyde or a polyvinyl alcohol as a raw material to be used is necessary in order to obtain a reaction rate required. The presence of a carboxylic acid as an impurity, however, will lower the efficiency of recovery of unreacted aldehyde. In addition, when there is a carboxylic acid with a low solubility in water like a butanoic acid, a problem that a polyvinyl alcohol is esterified will also arise. Furthermore, when there is a carboxylic acid having a high boiling point like a hexanoic acid, it is difficult to remove such a carboxylic acid from a polyvinyl acetal. Therefore, in the case of being used in an electronic component, it is feared that the residual carboxylic acid may cause corrosion of electrodes. Incidentally, in Patent Document 4, nitrogen, oxygen, nitrogen oxides, carbon dioxide, helium, argon, neon, water and air are provided as examples of the gas to be used for pressurization. However, only general-purpose gases as a medium for pressurization are shown here. Nitrogen gas is used in Examples.

In Patent Document 5, a method for producing a modified macromolecular compound in which a macromolecular compound is chemically modified in a supercritical fluid or a high-temperature and pressure fluid is disclosed. Producing a polyvinyl acetal by causing an aldehyde to react with a polyvinyl alcohol is disclosed as a specific example. It is reported that the supercritical fluid or the high-temperature and pressure fluid is at least one fluid selected from the group consisting of water, organic solvents and carbon dioxide. It is disclosed that the supercritical fluid or the high-temperature and pressure fluid is a fluid which has been heated and pressurized to a temperature of 100°C or higher and a pressure of 0.5 MPa or higher. According to Patent Document 5, in use of the high-temperature and pressure water, since the ion product for water increases to several hundred to several thousand times that at normal temperature, protons are supplied easily from water and an acid-base reaction can be advanced easily. However, in order for the ion product of water to increase to several hundred times that at normal temperature, the temperature and the pressure near the lower limits thereof (100°C, 0.5 MPa) are quite insufficient. Therefore, in Examples of Patent Document 5, the acetalization reactions are advanced at temperatures from 300 to 400°C and pressures from 9 to 25 MPa. It is disclosed that the pH can be reduced by use of a mixed fluid composed of water and carbon dioxide. In Example 12, the acetalization reaction is performed in such a fluid. It is, however, difficult to say that to perform an acetalization reaction at a high temperature like those used in these Examples is an industrially practical method because it is disadvantageous from the energy point of view and it requires a special reactor. Furthermore, since the reaction is performed at high temperature, a side reaction proceeds easily and the purity of the resulting polyvinyl acetal may lower.

Patent Document 1: JP 11-349629 A
Patent Document 2: JP 5-97919 A
Patent Document 3: JP 2000-38456 A
Patent Document 4: JP 2005-2285 A
Patent Document 5: WO 2003/033548 A

Non-Patent Document 1: "Polyvinyl Alcohol," C.A. Finch, Ed., p. 391-411, John Wiley and Sons Ltd., England, 1973
EP-A-1 775 311 which is prior art under Art. 54 (3) (4) EPC 1973 describes a process for producing polyvinylacetal resin, polyvinyl butyral resin, and a process for producing esterified polyvinyl alcohol resin.

The present invention has been made for solving the aforementioned problems and an object of the present invention is to provide a method for producing a high quality polyvinyl acetal resin containing less residual impurities such as metal salts and acids under mild conditions.
The subject matter of the present invention is characterized in the claims.
The method for producing a polyvinyl acetal resin according to the present invention is characterized by reacting a polyvinyl alcohol and a carbonyl compound at 40 to 200°C in the presence of an acid catalyst including carbon dioxide.
The polyvinyl alcohol preferably has an average degree of polymerization of 200 to 4000 and a degree of saponification of 80 mol% or more. It is desirable that the carbonyl compound is an aldehyde and it is more desirable that the aldehyde has an acid value measured in accordance with JIS K0070 of 20 mg KOH/g or less.
According to the present invention, the polyvinyl alcohol and the carbonyl compound are reacted in a liquid containing carbon dioxide dissolved, the liquid containing water and optionally alcohol as a solvent, and, when a mixed solvent of water and alcohol is used, the content of water is 50% by weight or more. The content of the polyvinyl alcohol at the time of feeding is preferably from 0.01 to 80% by weight based on the total weight of the reaction liquid. The reaction of the polyvinyl alcohol and the carbonyl compound while adjusting the pressure in a reactor to from 0.1 to 10 MPa by introduction of carbon dioxide into the reactor is a preferred embodiment of the present invention. The reaction of the polyvinyl alcohol and the carbonyl compound while adjusting the partial pressure of carbon dioxide in a reactor to from 0.1 to 10 MPa by introduction of carbon dioxide into the reactor is also a preferred embodiment of the present invention. According to the present invention and in these preferred embodiments, it is (more) preferable to react the polyvinyl alcohol and the carbonyl compound while pressurizing with carbon dioxide.
In the present invention, when a solubility of carbon dioxide in water is expressed in a molar fraction of carbon dioxide in a solution, the polyvinyl alcohol and the carbonyl compound are reacted under a reaction temperature and a pressure in a reactor such that the molar fraction becomes $1 \times 10^{-4}$ to $300 \times 10^{-4}$. It is desirable that the reaction is performed while stirring the liquid in a reaction vessel. It is also desirable that the reaction is performed while kneading under pressure in a kneader.
It is desirable to obtain a polyvinyl acetal resin having a degree of acetalization of 1 mol% or more by the above-mentioned methods. It is also desirable to obtain a polyvinyl acetal resin having a halogen element content of 100 ppm or less and an alkali metal element content of 1000 ppm or less.
By the method for producing a polyvinyl acetal resin of the present invention, it is possible to obtain a high quality polyvinyl acetal resin containing less residual impurities such as metal salts and acids under mild conditions. Therefore, it also becomes possible to omit or simplify complicated washing operations. This makes it possible to streamline the production process and reduce the waste water.
The method for producing a polyvinyl acetal resin of the present invention is characterized by reacting a polyvinyl alcohol and a carbonyl compound in the presence of an acid catalyst including carbon dioxide. Heretofore, strong inorganic acids such as hydrochloric acid and sulfuric acid have been used as an acid catalyst for acetalization and, the acid catalyst after the reaction is often neutralized with a strong alkali. In such a production method, the acid and alkali used and the salt formed must remain in large amounts in a polyvinyl acetal resin. As a result, complicated washing operations have been needed. Since a polyvinyl acetal resin with a low degree of acetalization is soluble in water, it is difficult to remove an acid, an alkali and a salt formed from such a polyvinyl alcohol. Therefore, in order to obtain a polyvinyl acetal resin containing an acid, an alkali and a salt formed in low contents, very complicated operations, such as dialysis, are needed. On the other hand, by use of carbon dioxide as an acid catalyst, the acid catalyst can be removed only by vaporization after the acetalization reaction and neutralization operations also become unnecessary. As a result, it has become possible to produce a polyvinyl acetal resin containing an acid, an alkali and a salt, if any, in low contents without performing complicated washing operations or dialysis operations. The present invention is one finding a method of producing a high quality polyvinyl acetal resin at a high productivity by using carbon dioxide as an acid catalyst of an acetalization reaction.

The polyvinyl alcohol, which is a raw material used in the present invention is not particularly restricted and may be appropriately chosen according to the application. The average degree of polymerization of the polyvinyl alcohol as a raw material is preferably from 200 to 4000. When the average degree of polymerization is less than 200, the strength of the polyvinyl acetal resin may lower. It is more preferably 1000 or more, and even more preferably 1500 or more. On the other hand, when the average degree of polymerization is greater than 4000, an aqueous solution comes to have too high a viscosity and therefore it may become difficult to handle it or the production cost may increase. Taking into consideration the solubility in water, the degree of saponification of the polyvinyl alcohol as a raw material is preferably 80 mol% or more. The degree of saponification is more preferably 90 mol% or more, and even more preferably 99 mol% or more. A modified polyvinyl alcohol may also be used.

The carbonyl compound used in the present invention is not particularly restricted if it can react with a polyvinyl alcohol to form an acetal. Although an aldehyde or a ketone is typically used, an aldehyde is preferably used from the viewpoint of reactivity. The aldehyde to be used in the present invention is not particularly restricted. Examples thereof include aliphatic aldehydes such as formaldehyde, acetaldehyde, propionaldehyde, n-butyl aldehyde, tert-butyl aldehyde, amyl aldehyde, hexyl aldehyde and 2-ethylhexyl aldehyde; alicyclic aldehydes such as cyclohexane carboaldehyde, cyclooctane carboaldehyde and norbornane carboaldehyde; aromatic aldehydes such as benzaldehyde, alkyl-substituted benzaldehyde, halogen-substituted benzaldehyde, phenyl-substituted alkyl aldehyde and furfural. Among these, acetaldehyde, butyl aldehyde and cyclohexane carboaldehyde are preferably used. In particular, butyl aldehyde, especially n-butyl aldehyde, is important from the industrial viewpoint. On the other hand, examples of the ketone to be used in the present invention include acetone, 2-butanone, 2-pentanone and acetophenone. Such carbonyl compounds may be used either singly or in combination.

Most of industrially available aldehydes are contaminated with a carboxylic acid. It is formed as a by-product during the production process or it results from oxidation in the air during the handling. Such a carboxylic acid may contaminate a polyvinyl acetal resin as an impurity or it may contaminate unreacted aldehyde during the recovery thereof or it may cause a side reaction such as an esterification reaction during the acetalization reaction. Therefore, in order to obtain a polyvinyl acetal resin of good quality, the acid value of the aldehyde is preferably 20 mg KOH/g or less, more preferably 5 mg KOH/g or less, and even more preferably 1 mg KOH/g or less. Here, the acid value is the number of milligrams of potassium hydroxide (KOH) necessary for neutralizing acid components in 1 g of aldehyde and it is a value measured in accordance with JIS K0070.

The amount of the carbonyl compound to be used in the present invention is controlled appropriately depending on the desired degree of acetalization. When the amount of a carbonyl compound necessary for acetalizing all the hydroxyl groups in a polyvinyl alcohol (namely, the molar number which is half that of the hydroxyl groups) is defined as the theoretical amount, it is desirable to use the carbonyl compound in a molar number 0.01 to 10 times the theoretical amount. The lower limit of the amount of the carbonyl compound used is preferably 0. 1 or more times, more preferably 0.4 or more times the theoretical amount. On the other hand, the upper limit is preferably 5 or less times, more preferably 2 or less times the theoretical amount. Here, the degree of acetalization (mol%) is expressed by the following formula.

$$\text{Degree of acetalization (mol\%)} = [(\text{the molar number of acetalized hydroxyl groups})/(\text{the total molar number of hydroxyl groups and acetyl groups in the raw material polyvinyl alcohol})] \times 100$$

The polyvinyl alcohol and the carbonyl compound are reacted in a liquid containing carbon dioxide dissolved in water and optionally alcohol as a solvent. Normally, a solution of a polyvinyl alcohol in water is prepared and then it is stirred together with a carbonyl compound in the presence of carbon dioxide. In the case where the carbonyl compound dissolves in the polyvinyl alcohol solution, the reaction will proceed in a homogeneous phase. In the case where the carbonyl compound does not dissolve in the polyvinyl alcohol solution, the reaction will proceed in a suspended state. In many cases, a polyvinyl butyral resin is deposited with the advance of the reaction.

Examples of the alcohol to be used as a solvent here include methanol, ethanol, propanol, isopropanol, butanol, 2-butanol, amyl alcohol, isoamyl alcohol, hexanol, cyclohexanol, octanol, ethylene glycol, diethylene glycol, propylene glycol, 1,3-propanediol and 1,4-butanediol. Two or more of such alcohols may be used in combination. In view of the solubility of carbon dioxide and the reactivity between a polyvinyl alcohol and a carbonyl compound, water is contained in the solvent. In use of a mixed solvent of water and alcohol, the content of water is 50% by weight or more. In view of the necessity for solvent recovery, use of substantially only water is preferred.

The concentration of the polyvinyl alcohol in the reaction solution is not particularly limited and may be adjusted in consideration of the solubility of the polyvinyl alcohol and the volumetric efficiency of reaction. The content of the polyvinyl alcohol at the time of feeding is preferably from 0.01 to 80% by weight based on the total weight of the reaction liquid. When the content of the polyvinyl alcohol is too small, the productivity may deteriorate. It therefore is more preferably 0.1% by weight or more, even more preferably 1% by weight or more, and particularly preferably 5% by weight or more. In the production method of the present invention in which carbon dioxide is used as an acid catalyst, the reaction temperature is often set to be higher than the conventional methods in which a strong acid, such as hydrochloric acid and sulfuric acid, is used as an acid catalyst. When the reaction temperature is increased, the viscosity of the reaction solution decreases. Therefore, stirring or kneading can be performed even when the material has a higher concentration. For example, a method in which kneading is performed by use of a kneader, disclosed later, is also preferably used. In such a case, it is possible to perform kneading and the production efficiency is improved even when the content of the polyvinyl alcohol is 20% by weight or more. On the other hand, when the content of the polyvinyl alcohol is too large, it may be difficult to perform stirring or kneading and, in particular, it may be impossible to perform stirring by use of stirring blades. Therefore, the content of the polyvinyl alcohol is more preferably 50% by weight or less, and even more preferably 30% by weight or less. In the present invention, when the reaction is performed while stirring the liquid in a reaction vessel, the content of the polyvinyl alcohol of from 0.01 to 20% by weight is a preferred embodiment. When the reaction is performed while kneading under pressure in a kneader, the content of the polyvinyl alcohol of from 20 to 80% by weight is a preferred embodiment.

In the production method of the present invention, the reaction of the polyvinyl alcohol and the carbonyl compound in the presence of an acid catalyst including carbon dioxide is the most significant feature. Although the method of placing carbon dioxide is not particularly restricted, it is desirable to dissolve carbon dioxide in a solvent within a sealable reactor.

In the production method of the present invention, it is desirable to react the polyvinyl alcohol and the carbonyl compound while adjusting the pressure in a reactor to from 0.1 to 10 MPa by introduction of carbon dioxide into the reactor. Here, a pressure of 0.1 MPa is substantially equal to the atmospheric pressure. Therefore, carbon dioxide may be introduced under the atmospheric pressure into the reactor and the reaction may proceed. In order to promote the acetalization reaction sufficiently, it is desirable to react the polyvinyl alcohol and the carbonyl compound while pressurizing with carbon dioxide. The pressure in the reactor at the time of pressuring is preferably 0.12 MPa or more, more preferably 0.15 MPa or more and even more preferably 0.2 MPa or more. The reactivity is improved with increase in the pressure. On the other hand, when the pressure in the reactor is more than 10 MPa, the facility cost may increase. The pressure is more preferably 5 MPa or less, and even more preferably 3 MPa or less. Making the pressure low can reduce the cost of a reactor and it is advantageous also from the energy viewpoint. The pressure within a reactor as referred to herein means the maximum pressure during the acetalization reaction and it is the result of addition of the solvent vapor pressure to the partial pressure of carbon dioxide.

In the production method of the present invention, it is desirable to react the polyvinyl alcohol and the carbonyl compound while adjusting the partial pressure of carbon dioxide within a reactor to from 0.1 to 10 MPa by introduction of carbon dioxide into the reactor. The partial pressure of carbon dioxide is preferably 0.12 MPa or more, more preferably 0.15 MPa or more and even more preferably 0.2 MPa or more. The reactivity is improved with increase in the partial pressure of carbon dioxide. On the other hand, when the partial pressure of carbon dioxide is more than 10 MPa, the facility cost may increase. The pressure is more preferably 5 MPa or less, and even more preferably 3 MPa or less. Making the pressure low can reduce the cost of a reactor and it is advantageous also from the energy viewpoint. The partial pressure of carbon dioxide as referred to herein means the maximum partial pressure of carbon dioxide during the acetalization reaction and it is the result of subtraction of the solvent vapor pressure from the pressure in the reactor. Here, the partial pressures of gas components other than carbon dioxide and the vapor pressure caused by minor components, such as aldehyde, are negligible.

The reaction temperature at the time of reacting the polyvinyl alcohol and the carbonyl compound is from 40 to 200°C. When the reaction temperature is lower than 40°C, the solubility of the polyvinyl alcohol and the molecular mobility are reduced and therefore the acetalization reaction proceeds slowly. The reaction temperature is preferably 60°C or higher, more preferably 80°C or higher, and even more preferably 100°C or higher. Since use of a high temperature leads to reduction in the viscosity of the reaction liquid, there is also an advantage that it becomes easy to use a reaction solution with a high polyvinyl alcohol concentration. On the other hand, when the reaction temperature is higher than 200°C, the acetal generation efficiency will deteriorate. This may be because the solubility of carbon dioxide in the reaction solution decreases with increase in the reaction temperature and therefore carbon dioxide hardly exerts a function as a catalyst any more. Moreover, when the reaction temperature is higher than 200°C, side reactions may take place. Conceivable examples of such side reactions include a cleavage reaction of the main chain of a polyvinyl alcohol or polyvinyl acetal and a condensation reaction of carbonyl compounds. A reaction at a temperature higher than 200°C is undesirable from the viewpoint of the cost of a reactor and the energy required. The reaction temperature is preferably 180°C or lower, more preferably 170°C or lower, and even more preferably 160°C or lower.

A suitable reaction temperature varies depending upon the degree of acetalization of a desired polyvinyl acetal. For example, in the production of a polyvinyl acetal with a degree of acetalization of from 1 to 30 mol%, a lower reaction temperature is preferred. The reaction temperature at this time is 40°C or higher, and preferably 60°C or higher. The reaction temperature at this time is preferably 160°C or lower, and more preferably 140°C or lower. In order to produce a polyvinyl acetal with a degree of acetalization of from 30 to 90 mol%, a higher reaction temperature is preferred. The reaction temperature at this time is preferably 80°C or higher, more preferably 100°C or higher, and even more preferably 120°C or higher. The reaction temperature at this time is 200°C or lower, preferably 180°C or lower, more preferably 170°C or lower, and even more preferably 160°C or lower.

In the present invention, when a solubility of carbon dioxide in water is expressed in a molar fraction of carbon dioxide in a solution, the polyvinyl alcohol and the carbonyl compound are reacted under a reaction temperature and a pressure in a reactor such that the molar fraction becomes $1\times10^{-4}$ to $300\times10^{-4}$. The fact that the molar fraction is within this range means that an appropriate amount of carbon dioxide has been dissolved in the reaction liquid. When the molar fraction is too small, the amount of carbon dioxide dissolved becomes small, leading to an insufficient effect as an acid catalyst. As a result, the acetalization reaction proceeds slowly. The molar fraction is desirably $5\times10^{-4}$ or more. On the other hand, when the molar fraction is too large, the pressure is often too high and therefore the apparatus cost tends to increase. The molar fraction is desirably $30\times10^{-4}$ or less.

The solubility of carbon dioxide in water [molar fraction: (the molar number of carbon dioxide dissolving in the solution) / (the total molar number of water and carbon dioxide in the solution)] is a value which varies depending on temperature and the partial pressure of carbon dioxide and these data are shown in publicly known documents, such as "Kagaku Binran" (chemistry handbook). In the present invention, if the reaction is performed by use of water as a main solvent, the approximate value of the molar fraction of carbon dioxide dissolved in the reaction liquid can be calculated based on the data disclosed in the above-mentioned documents. That is, the partial pressure ($P_{CO2}$) of carbon dioxide in the reactor is calculated by subtracting the saturated vapor pressure ($P_{H2O}$) at the reaction temperature (t) from the pressure ($P_T$) in the reactor. From the reaction temperature (t) and the partial pressure ($P_{CO2}$) of carbon dioxide, the molar fraction of carbon dioxide can be obtained based on the data in documents. Here, the calculation shall be performed without considering the partial pressure of gas components other than carbon dioxide and the vapor pressure caused by minor components, such as aldehyde. In short, the molar fraction can be calculated from the reaction temperature (t) and the pressure ($P_T$) in the reactor. It is desirable to promote the acetalization reaction under conditions where the molar fraction is included in the aforementioned specific range.

The acetalization reaction of the present invention may be produced using an apparatus either in a batch system or a continuous system. In any case, it is desirable to perform the reaction in a sealable apparatus so that no carbon dioxide leaks out. In order to promote the reaction uniformly, it is desirable that the reactor has means for stirring or kneading.

The reactor is chosen based mainly on the concentration of the polyvinyl alcohol in the reaction liquid. When the content of the polyvinyl alcohol at the time of feeding is 20% by weight or less based on the total weight of the reaction liquid, it is desirable to perform the reaction while stirring the liquid in a reaction vessel. The stirring means at this time is typically a stirring blade. Although the reaction may be performed in either a batch system or a continuous system, it is desirable to use a batch system in order to obtain a polyvinyl acetal with a high degree of acetalization. On the other hand, when the content of the polyvinyl alcohol at the time of feeding is 20% by weight or more based on the total weight of the reaction liquid, it is desirable to use a kneader because it becomes difficult to stir with a stirring blade because of an increased viscosity. The kneader used in such a case is not particularly restricted if the inside thereof can be pressurized. To use a kneader or an extruder as the kneader is preferred. It is desirable for the kneader or extruder to have a seal structure so as to pressurize the inside and also to have a port for pressurizing with carbon dioxide. In use of such a kneader, it is desirable that the raw materials are fed continuously into the kneader and are reacted therein while being kneaded under pressure.

The method of obtaining the resulting polyvinyl acetal resin after the completion of the acetalization reaction is not particularly restricted. It is possible to take out the polyvinyl acetal resin after depositing the resin by cooling the reactor. Alternatively, it may be taken out in a slurry form or in a paste form. A method may also be used in which a polyvinyl acetal is taken out after being dissolved in a solvent which can dissolve the polyvinyl acetal and then the solvent is distilled off. In use of a kneader as a reactor, it is also possible to cool a strand discharged, followed by cutting it into pellets.

Unreacted aldehyde and the solvent are removed from the resulting polyvinyl acetal and, if needed, they are recovered and then reused. Then, the polyvinyl acetal is washed and dried according to necessity. By use of the production method of the present invention, it is possible to obtain a polyvinyl acetal resin containing impurities in a small amount without performing washing operations because of using no catalyst and no neutralizing agent during the acetalization reaction. However, in some cases, it is desirable to perform washing operations in order to further reduce the content of impurities.

The degree of acetalization of the polyvinyl acetal produced by the method of the present invention is preferably 1 mol% or more. The degree of acetalization is more preferably 10 mol% or more. On the other hand, the degree of acetalization is normally 90 mol% or more. Here, the degree of acetalization is expressed by the following formula.

$$\text{Degree of acetalization (mol\%)} = [(\text{the molar number of}$$
$$\text{acetalized hydroxyl groups}) / (\text{the total molar number of hydroxyl}$$
$$\text{groups and acetyl groups in the raw material polyvinyl alcohol})]$$
$$\times 100$$

In use for applications including interlayer films for laminated glass, binders for ceramic molding, photosensitive materials and dispersing agents for ink, in order to satisfy performances including water resistance, solubility in a low polarity solvent and compatibility with a low polarity polymer, it is desirable that the degree of acetalization be high. Specifically, the degree of acetalization is preferably 30 mol% or more, and more preferably 40 mol % or more. On the other hand, when the degree of acetalization is low, the polyvinyl acetal resin may become soluble in water and it becomes difficult to remove impurities in the resin by washing. Therefore, use of the production method of the present invention is greatly beneficial. For this reason, use of the production method of the present invention is greatly beneficial also when the degree of acetalization is 30 mol% or less, in particular when the degree of acetalization is 20 mol% or less.

It is desirable that the halogen element content of the resulting polyvinyl acetal resin be 100 ppm or less. The halogen element contained in a resin triggers dehydration resulting in deterioration of the thermal stability of the resin. In electronic component applications, it is desired to make the halogen element content particularly low. The halogen element content is more desirably 10 ppm or less. It is also desirable that the alkali metal element content of the resulting polyvinyl acetal resin be 1000 ppm or less. An alkali metal element contained in a polyvinyl acetal resin affects the electrically insulating property, transparency and thermal stability of the resin. In electronic component applications, it is desired to make the alkali metal content particularly low. The alkali metal element content is more desirably 500 ppm or less.

A polyvinyl acetal resin obtained in such a manner is used in various applications such as intermediate films for safety glass, coating components, adhesives, binders and molded products. In particular, it can be used suitably for electronic component applications in which impurities should be avoided from remaining.

EXAMPLES

The present invention will be described in more detail with reference to Examples.

Example 1

Into a 500 mL stainless steel autoclave, 10 g of a polyvinyl alcohol produced by Kuraray Co., Ltd. (degree of polymerization: 1700, degree of saponification: 99 mol%, alkali metal element (sodium) content: 1340 ppm) and 100 g of water were charged, followed by dissolution by heating to 90°C under nitrogen. In 10 g of the polyvinyl alcohol, 0.225 mol of hydroxyl groups are contained. 9.81 g (0.136 mol) of n-butyl aldehyde having an acid value of 0.08 mg KOH/g was added thereto. The amount of the aldehyde used here is 1.2 times the theoretical amount for the acetalization of all the hydroxyl groups in the polyvinyl alcohol. Subsequently, following heating to 160°C, the pressure in the reactor was increased to 1 MPa by introduction of carbon dioxide. The solubility of carbon dioxide, shown in a molar fraction of carbon dioxide in the solution, is $7.6 \times 10^{-4}$. Four hours later, following cooling to 90°C, the pressure was released by discharge of carbon dioxide and 160 mL of isopropanol was sent under pressure with nitrogen. The liquid obtained was cooled. The analysis by $^1$H-NMR of the polyvinyl acetal which was deposited showed that 59.5 mol% of acetalized hydroxyl groups, 39.7 mol% of remaining hydroxyl groups, and 0.8 mol% of unsaponified acetyl groups were contained. Therefore, the degree of acetalization was 59.5 mol%. In addition, the total chlorine content in the polyvinyl acetal was less than the detection limit (10 ppm) (analyzed by anion chromatography after treatment by the oxygen flask combustion method) and the alkali metal content was 350 ppm (measured by the ICP emission spectrometry). The aforementioned results are summarized in Table 1.

Example 2

A polyvinyl butyral resin was produced in the same manner as in Example 1 except for changing the reaction temperature to 120°C. The solubility of carbon dioxide, shown in a molar fraction of carbon dioxide in the solution, is $16.3 \times 10^{-4}$. The total chlorine content in the polyvinyl acetal was less than the detection limit and the alkali metal content was 330 ppm. The results are summarized in Table 1.

Example 3

A polyvinyl butyral resin was produced in the same manner as in Example 1 except for changing the pressure in a reactor to 2 MPa and the reaction temperature to 140°C. The solubility of carbon dioxide, shown in a molar fraction of carbon dioxide in the solution, is $29.8 \times 10^{-4}$. The total chlorine content in the polyvinyl acetal was less than the detection limit and the alkali metal content was 340 ppm. The results are summarized in Table 1.

Example 4

A polyvinyl butyral resin was produced in the same manner as in Example 1 except for changing the pressure in a reactor to 7.8 MPa and the reaction temperature to 110°C. The solubility of carbon dioxide, shown in a molar fraction of carbon dioxide in the solution, is $111 \times 10^{-4}$. The total chlorine content in the polyvinyl acetal was less than the detection limit and the alkali metal content was 333 ppm. The results are summarized in Table 1.

Example 5

A polyvinyl butyral resin was produced in the same manner as in Example 1 except for changing the reaction solvent to water/isopropanol (IPA) = 8:2 (volume ratio). The total chlorine content in the polyvinyl acetal was less than the detection limit and the alkali metal content was 360 ppm. The results are summarized in Table 1.

Comparative Example 1

A polyvinyl butyral resin was produced in the same manner as in Example 1 except for pressurizing with nitrogen instead of carbon dioxide. The total chlorine content in the polyvinyl acetal was less than the detection limit and the alkali metal content was 350 ppm. The results are summarized in Table 1.

Example 6

Into a 500 mL stainless steel autoclave, 10 g of the same polyvinyl alcohol as that used in Example 1 and 100 g of water were charged, followed by dissolution by heating to 90°C under nitrogen. 1.26 g (0.0285 mol) of acetaldehyde having an acid value of 0.12 mg KOH/g was added thereto. The amount of the aldehyde used here is 0.25 times the theoretical amount for the acetalization of all the hydroxyl groups in the polyvinyl alcohol. Subsequently, following heating to 110°C, the pressure in the reactor was increased to 1 MPa with carbon dioxide. The solubility of carbon dioxide, shown in a molar fraction of carbon dioxide in the solution, is $17.2 \times 10^{-4}$. Four hours later, following cooling to 90°C, the pressure was released by discharge of carbon dioxide. The resulting liquid was cooled and water was removed using a hot air drier (80°C), followed by vacuum drying at 80°C. The analysis by $^1$H-NMR of the resulting polyvinyl acetal showed that 13.1 mol% of acetalized hydroxyl groups, 86.1 mol% of remaining hydroxyl groups, and 0.8 mol% of unsaponified acetyl groups were contained. Therefore, the degree of acetalization was 13.1 mol%. In addition, the total chlorine content in the polyvinyl acetal was less than the detection limit (10 ppm) (analyzed by anion chromatography after treatment by the oxygen flask combustion method) and the alkali metal content was 344 ppm (measured by the ICP emission spectrometry). The aforementioned results are summarized in Table 1.

Comparative Example 2

Into a 500 mL stainless steel autoclave, 10 g of the same polyvinyl alcohol as that used in Example 1 and 100 g of water were charged, followed by dissolution by heating to 90°C under nitrogen. 5.7 g (0.079 mol) of butyl aldehyde having an acid value of 0.08 mg KOH/g was added thereto. The amount of the aldehyde used here is 0.70 times the theoretical amount for the acetalization of all the hydroxyl groups in the polyvinyl alcohol. 8.5 g of 20% by weight hydrochloric acid was dropped at 25°C. After the completion of the dropping, stirring was continued at 65°C for 4 hours. Then, following cooling to room temperature, the polyvinyl acetal deposited was separated by filtration. To the resulting polyvinyl acetal, 100 mL of 0.5% aqueous sodium hydroxide solution was added, followed by stirring at 70°C for 1 hour. After filtration, washing with 100 mL of water was repeated 5 times. After drying the polyvinyl acetal washed, the analysis by $^1$H-NMR of the resulting polyvinyl acetal showed that 55.7 mol% of acetalized hydroxyl groups, 43.5 mol% of remaining hydroxyl groups, and 0.8 mol% of unsaponified acetyl groups were contained. Therefore, the degree of acetalization was 55.7 mol%. In addition, the total chlorine content in the polyvinyl acetal was 165 ppm (analyzed by anion chromatography after treatment by the oxygen flask combustion method) and the alkali metal content was 1050 ppm (measured by the ICP emission spectrometry).

[Table 1]

| | Aldehyde | Solvent | Pressurizing gas | Pressure (MPa) | Temperature (°C) | Resin composition analysis (mol%) | | | Halogen content (ppm) | Alkali content (ppm) |
|---|---|---|---|---|---|---|---|---|---|---|
| | | | | | | VB | VAl | VAc | | |
| Example 1 | BA | Water | $CO_2$ | 1 | 160 | 59.5 | 39.7 | 0.8 | <10 | 350 |
| Example 2 | BA | Water | $CO_2$ | 1 | 120 | 61.0 | 38.5 | 0.5 | <10 | 330 |
| Example 3 | BA | Water | $CO_2$ | 2 | 140 | 42.1 | 57.2 | 0.7 | <10 | 340 |
| Example 4 | BA | Water | $CO_2$ | 7.8 | 110 | 39.9 | 59.2 | 0.9 | <10 | 333 |
| Example 5 | BA | Water/ IPA | $CO_2$ | 1 | 160 | 38.0 | 60.8 | 1.2 | <10 | 360 |
| Example 6 | AA | Water | $CO_2$ | 1 | 110 | 13.1 | 86.1 | 0.8 | <10 | 344 |
| Comparative Example 1 | BA | Water | $N_2$ | 1 | 160 | 7.1 | 92.1 | 0.8 | <10 | 350 |
| Comparative Example 2 | BA | Water | None | Atmospheric pressure | 65 | 55.7 | 43.5 | 0.8 | 165 | 1050 |

Comparison of Examples 1 to 5 to Comparative Example 1 shows that although an acetalization reaction does not proceed when pressure was increased with nitrogen (Comparative Example 1), the reaction proceeds sufficiently when pressure is increased with carbon dioxide (Examples 1 to 5), and it was possible to obtain a resin having a degree of acetalization comparable to that in the case of using a strong acid as a catalyst (Comparative Example 2). That is, it is shown that carbon dioxide serves as not only a medium for increasing the pressure, but also as an acid catalyst. Although the acetalization reaction proceeds even in a mixed solvent of water and an alcohol, the degree of acetalization is a little lower than that in the case of using only water as a solvent (Example 5). When carbon dioxide gas was used as a catalyst (Example 1), both the halogen element content and the alkali metal element content were lower in comparison to the case of using hydrochloric acid as a catalyst (Comparative Example 2) even though washing operations were not performed.

Example 7

Into a 500 mL stainless steel autoclave, 100 g of 10% by weight aqueous solution of a polyvinyl alcohol produced by Kuraray Co., Ltd. (degree of polymerization: 1700, degree of saponification: 99 mol%, alkali metal element (sodium) content: 1340 ppm) was charged, followed by heating to 140°C under nitrogen. In 10 g of the polyvinyl alcohol, 0.225 mol of hydroxyl groups are contained. At this time, the pressure in the reactor had been increased to about 0.4 MPa. 12. 98 g (0.180 mol) of n-butyl aldehyde having an acid value of 0. 6 mg KOH/g was introduced into the reactor with pressurized carbon dioxide, thereby adjusting the overall pressure in the reactor to 0.9 MPa. The pressure increase of 0.5 MPa corresponds to the partial pressure of carbon dioxide. The amount of the aldehyde used here is 1.6 times the theoretical amount for the acetalization of all the hydroxyl groups in the polyvinyl alcohol. Subsequently, following heating and stirring at 140°C for 4 hours, cooling was performed until the internal temperature became 40°C or lower and then the pressure was released by discharge of carbon dioxide. The analysis by $^1$H-NMR of the polyvinyl acetal which was deposited showed that 88.1 mol% of acetalized hydroxyl groups, 11.2 mol% of remaining hydroxyl groups, and 0. 7 mol% of unsaponified acetyl groups were contained. Therefore, the degree of acetalization was 88.1 mol%. In addition, the total chlorine content in the polyvinyl acetal was less than the detection limit (10 ppm) (analyzed by anion chromatography after treatment by the oxygen flask combustion method) and the alkali metal content was 295 ppm (measured by the ICP emission spectrometry). The aforementioned results are summarized in Table 2.

Example 8

A polyvinyl butyral resin was produced and evaluated in the same manner as in Example 7 except for adjusting the partial pressure of carbon dioxide to 0.3 MPa. The results are shown in Table 2.

Example 9

A polyvinyl butyral resin was produced and evaluated in the same manner as in Example 7 except for changing the reaction temperature to 100°C. The results are shown in Table 2.

Example 10

A polyvinyl butyral resin was produced and evaluated in the same manner as in Example 7 except for changing the reaction temperature to 80°C. The results are shown in Table 2.

Example 11

A polyvinyl butyral resin was produced and evaluated in the same manner as in Example 7 except for changing the amount of the aldehyde used to 0.8 times the theoretical amount for the acetalization of all the hydroxyl groups in the polyvinyl alcohol. The results are shown in Table 2.

Example 12

A polyvinyl butyral resin was produced and evaluated in the same manner as in Example 7 except for changing the reaction time to 0.5 hour. The results are shown in Table 2.

Comparative Example 3

A polyvinyl butyral resin was produced and evaluated in the same manner as in Example 7 except for changing the reaction temperature to 250°C. The results are shown in Table 2.

Comparative Example 4

A polyvinyl butyral resin was produced and evaluated in the same manner as in Example 7 except for pressurizing with nitrogen instead of carbon dioxide and changing the reaction temperature to 250°C. The results are shown in Table 2.

Example 13

Into a twin-screw pressurizable stainless steel kneader with a capacity of 1500 ml, 300 g of a polyvinyl alcohol produced by Kuraray Co., Ltd. (degree of polymerization: 1700, degree of saponification: 99 mol%, alkali metal element (sodium) content: 1340 ppm) and 450 g of water were charged. Following purging the atmosphere in the system with nitrogen, heating and kneading were performed at an internal temperature of 100°C for 30 minutes under rotation of the screws at a rate of 30 rpm, followed by increasing the temperature up to 140°C. At this time, the pressure in the kneader had increased to about 0.4 MPa. 392.56 g (5.44 mol) of n-butyl aldehyde having an acid value of 0.6 mg KOH/g was introduced into the reactor with pressurized carbon dioxide, thereby adjusting the overall pressure in the kneader to 0.9 MPa. The pressure increase of 0. 5 MPa corresponds to the partial pressure of carbon dioxide. The amount of the aldehyde used here is 1. 6 times the theoretical amount for the acetalization of all the hydroxyl groups in the polyvinyl alcohol. Subsequently, following heating and kneading at 140°C for 4 hours, cooling was performed until the internal temperature became 40°C or lower and then the pressure was released by discharge of carbon dioxide. The analysis by $^1$H-NMR of the polyvinyl acetal which was deposited showed that 63.7 mol% of acetalized hydroxyl groups, 35.6 mol% of remaining hydroxyl groups, and 0.7 mol% of unsaponified acetyl groups were contained. Therefore, the degree of acetalization was 63.7 mol%. In addition, the total chlorine content in the polyvinyl acetal was less than the detection limit (10 ppm) (analyzed by anion chromatography after treatment by the oxygen flask combustion method) and the alkali metal content was 300 ppm (measured by the ICP emission spectrometry).

Example 14

A polyvinyl butyral resin was produced and evaluated in the same manner as in Example 13 except for charging 300 g of a polyvinyl alcohol and 700 g of water. The results are shown in Table 2.

Comparative Example 5

Into a 500 mL stainless steel autoclave, 100 g of 10% by weight aqueous solution of the same polyvinyl alcohol as that used in Example 7 was charged under a nitrogen atmosphere. Following pressurization with 1 MPa carbon dioxide, it was heated and stirred at 250°C for 30 minutes. After reducing the internal temperature to 40°C or lower, the pressure was released by discharge of carbon dioxide. Following removal of water by drying under reduced pressure, the molecular weight of the polyvinyl alcohol was measured by gel permeation chromatography [GPC (eluent: hexafluoroisopropanol, calibrated with polymethyl methacrylate standards)]. The results are as follows.

- Molecular weight of the raw material polyvinyl alcohol
  Weight average molecular weight: 137,000; Number average molecular weight: 67,000
- Molecular weight of the polyvinyl alcohol after heat treatment
  Weight average molecular weight: 108,000; Number average molecular weight: 48,000

[Table 2]

| | Amount of aldehyde used (factor to the theoretical amount) | PVA concentration (wt%) | Pressurizing gas | Partial pressure of pressurizing gas (MPa) | Temperature (°C) | Reaction time (hr) | Resin composition analysis (mol%) | | | Halogen content (ppm) | Alkali content (ppm) |
|---|---|---|---|---|---|---|---|---|---|---|---|
| | | | | | | | VB | VAl | VAc | | |
| Example 7 | 1.6 | 10 | $CO_2$ | 0.5 | 140 | 4 | 88.1 | 11.2 | 0.7 | <10 | 295 |
| Example 8 | 1.6 | 10 | $CO_2$ | 0.3 | 140 | 4 | 83.3 | 16.0 | 0.7 | <10 | 280 |
| Example 9 | 1.6 | 10 | $CO_2$ | 0.5 | 100 | 4 | 40.5 | 58.8 | 0.7 | <10 | 310 |
| Example 10 | 1.6 | 10 | $CO_2$ | 0.5 | 80 | 4 | 19.2 | 80.1 | 0.7 | <10 | 260 |
| Example 11 | 0.8 | 10 | $CO_2$ | 0.5 | 140 | 4 | 35.0 | 64.3 | 0.7 | <10 | 350 |
| Example 12 | 1.6 | 10 | $CO_2$ | 0.5 | 140 | 0.5 | 29.0 | 70.3 | 0.7 | <10 | 310 |
| Example 13 | 1.6 | 40 | $CO_2$ | 0.5 | 140 | 4 | 63.7 | 35.6 | 0.7 | <10 | 300 |
| Example 14 | 1.6 | 30 | $CO_2$ | 0.5 | 140 | 4 | 71.2 | 28.1 | 0.7 | <10 | 280 |
| Comparative Example 3 | 1.6 | 10 | $CO_2$ | 0.5 | 250 | 0.5 | 8.9 | 90.5 | 0.6 | <10 | 380 |
| Comparative Example 4 | 1.6 | 10 | $N_2$ | 0.5 | 250 | 0.5 | 14.3 | 85.0 | 0.7 | <10 | 310 |

As shown in Examples 7 and 8, the degree of acetalization of the polyvinyl butyral obtained increases as the partial pressure of carbon dioxide increases. Moreover, as shown in Examples 7, 9 and 10, the degree of acetalization increases with the reaction temperature. However, as shown in Comparative Example 3, when the reaction is performed at a temperature as high as 250°C, the reaction hardly proceeds and the degree of acetalization was lower than Comparative Example 4, in which the pressure was increased with nitrogen. This shows that carbon dioxide does not serve as a catalyst under such high temperature conditions. As shown in Comparative Example 5, when a reaction is performed at a high temperature as high as 250°C, polymer chains of a raw material polyvinyl alcohol will cleave. Moreover, as shown in Examples 13 and 14, even when the polyvinyl alcohol concentration is high, use of a kneader makes it possible to promote an acetalization reaction.

**Claims**

1. A method for producing a polyvinyl acetal resin, comprising reacting a polyvinyl alcohol and a carbonyl compound at 40 to 200°C in the presence of an acid catalyst comprising carbon dioxide, wherein the polyvinyl alcohol and the carbonyl compound are reacted in a liquid containing carbon dioxide dissolved, the liquid containing water and optionally alcohol as a solvent, and, when a mixed solvent of water and alcohol is used, the content of water is 50% by weight or more, and wherein when a solubility of carbon dioxide in water is expressed in a molar fraction of carbon dioxide in a solution, the polyvinyl alcohol and the carbonyl compound are reacted under a reaction temperature and a pressure in a reactor such that the molar fraction becomes $1 \times 10^{-4}$ to $300 \times 10^{-4}$.

2. The method for producing a polyvinyl acetal resin according to claim 1, wherein the polyvinyl alcohol has an average degree of polymerization of 200 to 4000 and a degree of saponification of 80 mol% or more.

3. The method for producing a polyvinyl acetal resin according to claim 1 or 2, wherein the carbonyl compound is an aldehyde.

4. The method for producing a polyvinyl acetal resin according to claim 3, wherein the aldehyde has an acid value measured in accordance with JIS K0070 of 20 mg KOH/g or less.

5. The method for producing a polyvinyl acetal resin according to any one of claims 1 to 4, wherein the content of the polyvinyl alcohol at the time of feeding is from 0.01 to 80% by weight based on the total weight of the reaction liquid.

6. The method for producing a polyvinyl acetal resin according to any one of claims 1 to 5, wherein the pressure in a reactor is adjusted to from 0.1 to 10 MPa by introduction of carbon dioxide into the reactor, and the polyvinyl alcohol and the carbonyl compound are reacted.

7. The method for producing a polyvinyl acetal resin according to any one of claims 1 to 5, wherein the partial pressure of carbon dioxide in a reactor is adjusted to from 0.1 to 10 MPa by introduction of carbon dioxide into the reactor, and the polyvinyl alcohol and the carbonyl compound are reacted.

8. The method for producing a polyvinyl acetal resin according to any one of claims 1 to 7, wherein the reaction is performed under stirring the liquid in a reaction vessel.

9. The method for producing a polyvinyl acetal resin according to any one of claims 1 to 7, wherein the reaction is performed under kneading under pressure in a kneader.

10. The method for producing a polyvinyl acetal resin according to any one of claims 1 to 9, whereby a polyvinyl acetal resin having a degree of acetalization of 1 mol% or more is obtained.

11. The method for producing a polyvinyl acetal resin according to any one of claims 1 to 10, whereby a polyvinyl acetal resin having a halogen element content of 100 ppm or less and an alkali metal element content of 1000 ppm or less is obtained.

**Patentansprüche**

1. Verfahren zur Herstellung eines Polyvinylacetalharzes, umfassend das Umsetzen eines Polyvinylalkohols und einer Carbonylverbindung bei 40 bis 200°C in der Gegenwart eines Säurekatalysators, umfassend Kohlendioxid, wobei der Polyvinylalkohol und die Carbonylverbindung in einer Flüssigkeit, welche gelöstes Kohlendioxid enthält, umgesetzt werden, die Flüssigkeit Wasser und gegebenenfalls Alkohol als ein Lösemittel enthält und, wenn ein gemischtes Lösemittel aus Wasser und Alkohol verwendet wird, der Gehalt an Wasser 50 Gew.-% oder mehr beträgt, und wobei, wenn eine Löslichkeit von Kohlendioxid in Wasser als ein Stoffmengenanteil von Kohlendioxid in einer Lösung ausgedrückt wird, der Polyvinylalkohol und die Carbonylverbindung bei einer Reaktionstemperatur und einem Druck in einem Reaktor umgesetzt werden, so dass der Stoffmengenanteil $1 \times 10^{-4}$ bis $300 \times 10^{-4}$ wird.

2. Verfahren zur Herstellung eines Polyvinylacetalharzes nach Anspruch 1, wobei der Polyvinylalkohol einen gemittelten Polymerisationsgrad von 200 bis 4000 und einen Verseifungsgrad von 80 Mol-% oder mehr aufweist.

3. Verfahren zur Herstellung eines Polyvinylacetalharzes nach Anspruch 1 oder 2, wobei die Carbonylverbindung ein Aldehyd ist.

4. Verfahren zur Herstellung eines Polyvinylacetalharzes nach Anspruch 3, wobei der Aldehyd einen Säurewert, gemessen gemäß JIS K0070, von 20 mg KOH/g oder weniger aufweist.

5. Verfahren zur Herstellung eines Polyvinylacetalharzes nach einem der Ansprüche 1 bis 4, wobei der Gehalt des Polyvinylalkohols zum Zugabezeitpunkt 0,01 bis 80 Gew.-%, bezogen auf das Gesamtgewicht der Reaktionsflüssigkeit, beträgt.

6. Verfahren zur Herstellung eines Polyvinylacetalharzes nach einem der Ansprüche 1 bis 5, wobei der Druck in einem Reaktor auf 0,1 bis 10 MPa durch Einleiten von Kohlendioxid in den Reaktor eingestellt wird und der Polyvinylalkohol und die Carbonylverbindung umgesetzt werden.

7. Verfahren zur Herstellung eines Polyvinylacetalharzes nach einem der Ansprüche 1 bis 5, wobei der Partialdruck von Kohlendioxid in einem Reaktor auf 0,1 bis 10 MPa durch Einleiten von Kohlendioxid in den Reaktor eingestellt wird und der Polyvinylalkohol und die Carbonylverbindung umgesetzt werden.

8. Verfahren zur Herstellung eines Polyvinylacetalharzes nach einem der Ansprüche 1 bis 7, wobei die Umsetzung unter Rühren der Flüssigkeit in einem Reaktionsgefäß durchgeführt wird.

9. Verfahren zur Herstellung eines Polyvinylacetalharzes nach einem der Ansprüche 1 bis 7, wobei die Umsetzung unter Kneten unter Druck in einem Kneter durchgeführt wird.

10. Verfahren zur Herstellung eines Polyvinylacetalharzes nach einem der Ansprüche 1 bis 9, wodurch ein Polyvinylacetalharz mit einem Acetalisierungsgrad von 1 Mol-% oder mehr erhalten wird.

11. Verfahren zur Herstellung eines Polyvinylacetalharzes nach einem der Ansprüche 1 bis 10, wodurch ein Polyvinylacetalharz mit einem Halogenelementgehalt von 100 ppm oder weniger und einem Alkalimetallelementgehalt von 1000 ppm oder weniger erhalten wird.

## Revendications

1. Procédé de production d'une résine de poly(acétal de vinyle), comprenant la réaction d'un poly(alcool vinylique) et d'un composé carbonyle de 40 à 200°C en présence d'un catalyseur acide comprenant du dioxyde de carbone, où le poly(alcool vinylique) et le composé carbonyle sont mis à réagir dans un liquide contenant du dioxyde de carbone dissous, le liquide contenant de l'eau et le cas échéant, un alcool comme solvant, et, lorsque l'on utilise un solvant mixte d'eau et d'alcool, la teneur en eau est de 50% en poids ou plus, et où, lorsque la solubilité du dioxyde de carbone dans l'eau est exprimée sous forme de fraction molaire de dioxyde de carbone en solution, le poly(alcool vinylique) et le composé carbonyle sont mis à réagir à une température de réaction et sous une pression dans le réacteur telles que la fraction molaire se situe dans l'intervalle allant de $1 \times 10^{-4}$ à $300 \times 10^{-4}$.

2. Procédé de production d'une résine de poly(acétal de vinyle) selon la revendication 1, où le poly(alcool vinylique) a un degré moyen de polymérisation allant de 200 à 4000 et un degré de saponification de 80% en moles ou plus.

3. Procédé de production d'une résine de poly(acétal de vinyle) selon la revendication 1 ou 2, où le composé carbonyle est un aldéhyde.

4. Procédé de production d'une résine de poly(acétal de vinyle) selon la revendication 3, où l'aldéhyde a un indice d'acide mesuré selon JIS K0070 de 20 mg KOH/g ou moins.

5. Procédé de production d'une résine de poly(acétal de vinyle) selon l'une quelconque des revendications 1 à 4, où la teneur en poly(alcool vinylique) au moment de l'alimentation se situe dans l'intervalle allant de 0,01 à 80% en poids sur base du poids total du liquide réactionnel.

6. Procédé de production d'une résine de poly(acétal de vinyle) selon l'une quelconque des revendications 1 à 5, où la pression dans le réacteur est ajustée dans l'intervalle allant de 0,1 à 10 MPa par introduction de dioxyde de carbone dans le réacteur, et le poly(alcool vinylique) et le composé carbonyle sont mis à réagir.

7. Procédé de production d'une résine de poly(acétal de vinyle) selon l'une quelconque des revendications 1 à 5, où la pression partielle du dioxyde de carbone dans le réacteur est ajustée dans l'intervalle allant de 0,1 à 10 MPa par introduction de dioxyde de carbone dans le réacteur, et le poly(alcool vinylique) et le composé carbonyle sont mis à réagir.

8. Procédé de production d'une résine de poly(acétal de vinyle) selon l'une quelconque des revendications 1 à 7, où la réaction est réalisée sous agitation du liquide dans le récipient de réaction.

9. Procédé de production d'une résine de poly(acétal de vinyle) selon l'une quelconque des revendications 1 à 7, où la réaction est effectuée par malaxage sous pression dans un malaxeur.

10. Procédé de production d'une résine de poly(acétal de vinyle) selon l'une quelconque des revendications 1 à 9, où une résine de poly(acétal de vinyle) ayant un degré d'acétalisation de 1% en moles ou plus est obtenue.

11. Procédé de production d'une résine de poly(acétal de vinyle) selon l'une quelconque des revendications 1 à 10, où une résine de poly(acétal de vinyle) ayant une teneur en élément halogène de 100 ppm ou moins et une teneur en élément métal alcalin de 1000 ppm ou moins est obtenue.

**EP 1 921 095 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11349629 A
- JP 5097919 A
- JP 2000038456 A
- JP 2005002285 A
- WO 2003033548 A
- EP 1775311 A

**Non-patent literature cited in the description**

- Polyvinyl Alcohol. John Wiley and Sons Ltd, 1973, 391-411